# EUROPEAN PATENT APPLICATION

(11) **EP 4 806 731 A1**
(43) Date of publication of application: **16.09.2026**
(21) Application number: 24888465.2
(22) Date of filing: 11.10.2024
(51) Int. Cl.: B60R 21/213, B60R 21/233, B60R 21/2338

(54) **AIRBAG DEVICE**

(30) Priority: 10.11.2023 JP 2023192320
(71) Applicant: AUTOLIV DEVELOPMENT AB, 44783 Vargarda (JP)
(72) Inventor: ABE Kazuhiro, Yokohama-shi, Kanagawa 222-8580 (JP); KUMAR Sumit, Yokohama-shi, Kanagawa 222-8580 (JP)
(74) Representative: Feucker, Max Martin
(86) International application number: PCT/JP2024/036449
(87) International publication number: WO 2025/100167

(57) **Abstract**

To provide an airbag device including an airbag that deploys from a roof portion of a vehicle cabin and capable of adequately protecting an occupant. This is an airbag device equipped with an airbag that deploys in front of the occupant inside the vehicle cabin to protect the occupant. The airbag includes a main chamber 17 that deploys downward from a roof portion of the vehicle, and a protruding part that deploys at a lower part of the main chamber 17 so as to protrude toward the front of the vehicle. The protruding part can be a sub-chamber 18 provided to be in fluid connection with the main chamber 17, where the sub-chamber 18 expands and deploys due to gas flowing in from the main chamber 17 through a vent hole 22. When viewed from the side of the vehicle, the vent hole 22 is positioned below a center C1 in the longitudinal direction L1 of the main chamber 17.

## Description

### TECHNICAL FIELD

The present invention relates to an airbag device for protecting an occupant riding in a vehicle. In particular, the present invention relates to an airbag device that includes an airbag that deploys from a roof portion of the vehicle cabin into the vehicle cabin.

### BACKGROUND ART

Providing a vehicle with one or more kinds of airbags in order to protect an occupant in the event of a vehicle accident is well known. There are various forms of airbags, including, for example: a so-called driver airbag that expands from a vicinity of a center of a steering wheel of an automobile in order to protect a driver; a front passenger airbag that expands from the instrument panel in order to protect an occupant in a front passenger seat; a curtain airbag that deploys in a downward direction on the inner side of a window of the automobile in order to protect the occupant in the event of an impact in the vehicle lateral direction or an overturn or rollover accident; and a side airbag that deploys from a side part of a seat in order to protect the occupant in the event of an impact in the vehicle lateral direction.

In recent years, as autonomous driving technology (level) for vehicles has advanced, there has been an increase in the design freedom of vehicle cabins. In such situations, there are cases where airbags that deploy from a steering wheel or instrument panel do not adequately protect an occupant. Therefore, as disclosed in Patent Documents 1 and 2, methods have been proposed in which an airbag deploys from a roof portion inside a vehicle cabin.

However, the inventions disclosed in Patent Document 1 and Patent Document 2 may not adequately restrain the occupant depending on their physique and seating orientation. For example, if a seat is set in a forwardmost position, there is a risk that the occupant's head part will strike the instrument panel or the like before the airbag reaches the occupant.

### RELATED ART DOCUMENTS

### PATENT DOCUMENTS

Patent Document 1: EP 2686206 B
Patent Document 2: US 6460878 B

### SUMMARY OF THE INVENTION

### PROBLEM TO BE SOLVED BY THE INVENTION

In view of the foregoing, an object of the present invention is to provide an airbag device including an airbag that deploys from a roof portion of a vehicle cabin and capable of adequately protecting an occupant.

### MEANS FOR SOLVING THE PROBLEM

To resolve the problems described above, the present invention is an airbag device including:
an airbag that protects an occupant by deploying in front of the occupant in a vehicle cabin, wherein
the airbag includes a main chamber that deploys downward from a roof portion of the vehicle, and a protruding part that deploys at a lower part of the main chamber so as to protrude toward the front of the vehicle.

Here, "downward from the roof portion of the vehicle" includes, for example, a configuration in which a folded airbag is stowed inside the roof lining, and when the airbag device is activated, a part of the roof lining ruptures and the airbag deploys into the vehicle cabin. However, this does not exclude a configuration in which the folded airbag is installed on the outer side (vehicle cabin side) of the roof lining.

In the present invention as described above, a main chamber that deploys downward from the roof portion inside the vehicle cabin is provided, so the main chamber can be quickly deployed in a position close to the occupant. In addition, by providing a protruding part that deploys so as to protrude toward the front the vehicle at the lower part of the main chamber, the protruding part can quickly make contact with the instrument panel, and the like, thereby obtaining a reaction force from the instrument panel, and the like, which leads to a more stable deployment behavior of the main chamber.

The present invention is most effective when used as an airbag device for the passenger seat, where there is ample space in front of the occupant. Note that if the airbag device according to the present invention is intended for driver protection, for example, the airbag that deploys from the steering wheel may be omitted, and the protruding part that deploys in front of the main chamber may come into contact with the steering wheel. In addition, when the airbag device according to the present invention is used for the rear seats, the airbag deploys from the roof of the rear seats of the vehicle, and the protruding part comes into contact with the lower part of the backrest of the front seats.

The protruding part can be a sub-chamber provided so as to enable fluid communication with the main chamber, and can be configured to expand and deploy by gas flowing in from the main chamber through a first vent.

When viewed from a side of the vehicle, the first vent can be configured at a position below a center of the main chamber in a longitudinal direction thereof. Here, "longitudinal direction" generally refers to the vertical direction.

In this way, by providing the first vent at the bottom that connects the main chamber and the sub-chamber, the deployment position of the sub-chamber is lowered, allowing the sub-chamber to quickly come into contact with the instrument panel or the like. In addition, the sub-chamber deploys near a knee of the occupant, so an effect similar to that of a knee airbag for protecting the occupant's lower limbs is anticipated.

When viewed from a side of the vehicle, the sub-chamber can be configured to deploy in a direction substantially perpendicular to a longitudinal direction of the main chamber in a deployed state.

By deploying the sub-chamber in a direction roughly perpendicular to the longitudinal direction of the main chamber, the reaction forces received by the sub-chamber from the instrument panel and the like can be efficiently transmitted to the main chamber.

The aforementioned protruding part can be formed integrally with the main chamber. Here, "formed integrally" means formed as a single chamber, excluding cases where the main chamber and the protruding part are formed by connecting two different chambers.

The main chamber can be configured to deploy with a lower portion thereof tilted toward the occupant in the vertical direction.

By deploying the main chamber with the lower portion thereof tilted towards the occupant relative to the vertical direction, contact with the occupant is made more quickly compared to when the main chamber simply expands and deploys vertically, allowing for earlier restraint of the occupant.

The main chamber may be provided with a bent part near an upper end part thereof.

By bending the area near the upper end of the main chamber, the starting point of the deployment of the main chamber can be easily adjusted. For example, by arranging the bent part forward of the boundary portion between the roof lining and the windshield, the bent part can receive a reaction force from the windshield, thereby supporting reliable deployment of the main chamber toward the occupant.

A horizontal chamber can be connected to an upper end part of the main chamber and configured to expand and deploy along the roof portion, and the main chamber can be configured to expand and deploy by gas flowing in from the horizontal chamber.

The horizontal chamber can be formed as a chamber separate from the main chamber, and can be configured such that expansion gas flows from the horizontal chamber into the main chamber through a second vent.

At least two tethers connected to an inner surface of the main chamber can be provided to regulate deployment of the main chamber in a front-back direction thereof.

The at least two tethers can include an upper tether and a lower tether, and when the airbag deploys, the rear ends of the upper tether and the lower tether can be positioned above and below the head part of the occupant (corresponding to dummies developed by the National Highway Traffic Safety Administration (NHTSA), namely THOR, AM50 dummy; 50th male (50% adult male dummy, approximately 175 cm tall, approximately 78 kg in weight) and AF05 dummy (5% adult female dummy), or Hybrid III 5th female (5% adult female dummy, approximately 145 cm tall, approximately 49 kg in weight)). In the present invention, "occupant" refers to a dummy having a prescribed physique based on the above definition.

By configuring the rear ends of the upper tether and lower tether to be positioned above and below the head part of the occupant, the head part of the occupant will be positioned between the two rear end parts of the tethers when viewed from the side of the vehicle. Therefore, the probability of the head part of the occupant coming into contact with the tether connection part, which is harder than the cushion portion, is low, allowing the head part of the occupant to be softly supported.

The length of the upper tether can be made shorter than the length of the lower tether.

When viewed from the side of the vehicle, the upper tether can be provided to slope upward from front to rear, and the lower tether can be provided to slope downward from front to rear.

In the specification, claims, and drawings of the present application, "front" refers to the front (in a traveling direction) of a vehicle, "back" refers to the rear (opposite side from the traveling direction) of the vehicle, "right" refers to the right side in the traveling direction, "left" refers to the left side in the traveling direction, and "vehicle width direction" refers to the left-right direction.

### BRIEF DESCRIPTION OF THE DRAWINGS

FIG. 1 is a side view depicting the inside of a vehicle provided with an airbag device according to the present invention;
FIG. 2 is a side view depicting a deployed state of an airbag according to Embodiment 1 of the present invention;
FIG. 3(A) and (B) are cross sectional views depicting the initial deployment state (A) and the fully deployed state (B) of an airbag according to Embodiment 1 of the present invention;
FIG. 4 is a side view depicting a deployed state of an airbag according to Embodiment 2 of the present invention; and
FIG. 5 is a side view depicting a deployed state of the airbag according to Embodiment 3 of the present invention.

### EMBODIMENTS OF THE INVENTION

An airbag device for a front passenger seat according to embodiments of the present invention is described in detail below on the basis of the accompanying drawings. Note that in the present embodiment, while occupants P0 and P1 are based on experimental dummies, it goes without saying that the same functions will be achieved with an actual occupant (human). An occupant P0 corresponds to an AM50 dummy for the THOR, and occupant P1 corresponds to the AF05 dummy for the THOR.

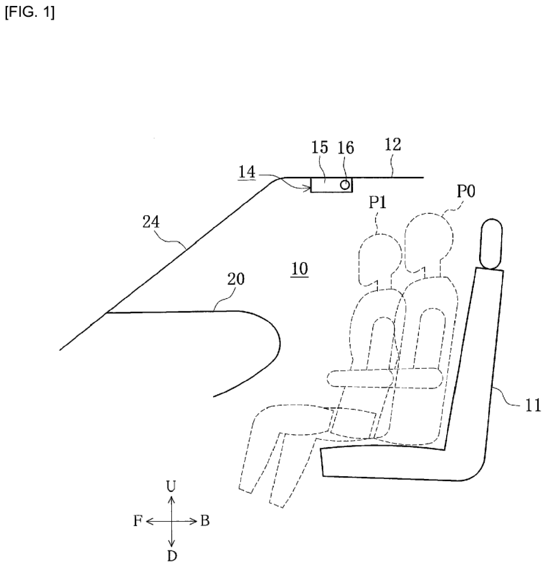

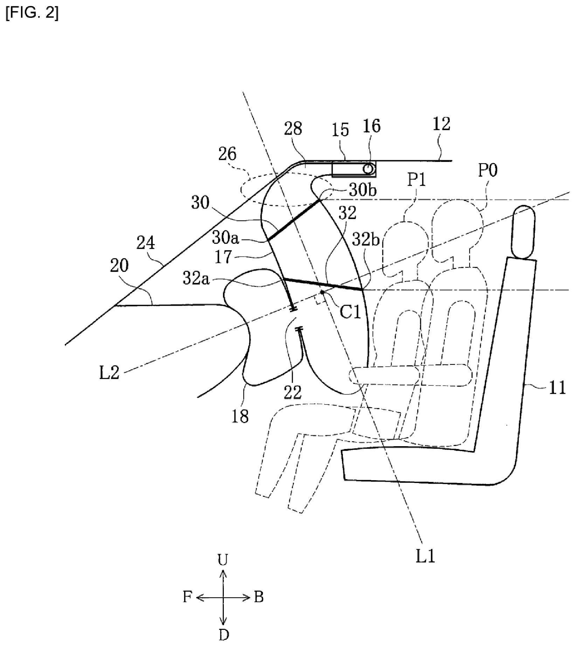

FIG. 1 is a side view depicting the inside of a vehicle provided with an airbag device according to the present invention. FIG. 2 is a side view depicting a deployed state of the airbag according to Embodiment 1. The embodiments depicted in FIG. 1 to FIG. 5 all assume an airbag device for the passenger seat, with an instrument panel 20 positioned in front of the occupant.

As depicted in FIG. 1, an airbag device 14 according to the present invention protects occupants (P0, P1) seated in a seat 11 in a vehicle cabin 10 and is stowed in a roof portion 12. The airbag device 14 includes an inflator 16 that generates expansion gas, and airbags 17 and 18 that expand and deploy using the expansion gas released from the inflator 16 (see FIG. 2). The inflator 16 and airbags 17 and 18 are stowed within a housing 15. Note that the housing 15 is not a mandatory configuration; the airbags 17 and 18 and the inflator 16 can also be held in place by a wrap cloth or a strap.

Note that the airbag device 14 is usually installed inside the roof lining (not depicted), but can also be installed outside the roof lining. In addition, the airbag device 14 can be arranged near the boundary between the windscreen (front glass) 24 and the roof lining, and can be installed, for example, on the back of the sun visor (not depicted).

As depicted in FIG. 2, the airbags 17 and 18 are configured to protect the occupants by deploying from the roof portion 12 of the vehicle in front of occupants P0 and P1 within the vehicle cabin 10. The airbags 17 and 18 include a main chamber 17 that expands downward, and a sub-chamber 18 that expands at a lower part of the main chamber 17 so as to protrude toward the front of the vehicle. The sub-chamber 18 can also be described as a protruding part.

The main chamber 17 and the sub-chamber 18 are formed into bags from separate base fabrics and connected by sewing around a vent hole 22. The vent hole 22 corresponds to the first vent. Furthermore, expansion gas flows from the main chamber 17 into the sub-chamber 18.

When viewed from the side of the vehicle, the vent hole 22 is positioned below a center C1 in a longitudinal direction L1 of the main chamber. In this way, by providing a vent hole 22 that connects the main chamber 17 and the sub-chamber 18 at a lower part, the deployment position of the sub-chamber 18 is lowered, and the sub-chamber 18 can be quickly brought into contact with the instrument panel 20, or the like. In addition, the sub-chamber 18 will deploy near a knee of the occupant, so an effect similar to that of a knee airbag of protecting the occupant's lower limbs is anticipated.

In addition, the sub-chamber 18 is designed to deploy in a direction L2 that is approximately perpendicular to the longitudinal direction L1 of the main chamber 17 in a deployed state. This allows the reaction force received by the sub-chamber 18 from the instrument panel 20 or the like, to be efficiently transmitted to the main chamber 17.

The main chamber 17 is configured to deploy with a lower portion thereof tilted toward the occupant in the vertical direction (U-D direction). This allows for more rapid contact with the occupant, particularly their abdomen, compared to when the main chamber 17 simply expands and deploys vertically (U-D direction).

At the upper end part of the main chamber 17, a horizontal chamber 28 is provided that expands and deploys along the roof portion 12, and the inflator 16 is stowed inside the horizontal chamber 28. The main chamber 17 is designed to expand and deploy based on the gas flowing in from the horizontal chamber 28.

A bent part 26 is formed at a boundary portion between the main chamber 17 and the horizontal chamber 28. By bending the area near the upper end of the main chamber 17, the starting point of the deployment direction of the main chamber 17 can be easily adjusted. For example, by arranging the bent part 26 in front of the boundary portion between the roof lining (12) and a windshield 24, an upper surface of the bent part 26 receives a reaction force from the windshield 24, causing the main chamber 17 to expand and deploy in a direction that intersects with the windshield 24. This facilitates the main chamber 17 deploying in a direction that is roughly perpendicular to the windshield 24 or a vertical direction. As a result, the deployment direction L1 of the main chamber 17 can more reliably be controlled.

Two tethers (upper tether 30 and lower tether 32) are connected to an inner surface of the main chamber 17 to restrict deployment of the main chamber 17 in the front-back direction. The front ends (30a and 32a) of these tethers 30 and 32 are sewn to the inside front of the main chamber 17, and the rear ends (30b and 32b) are sewn to the inside back surface (rear surface) of the main chamber 17. Furthermore, the rear ends (30b and 32b) of the upper tether 30 and the lower tether 32 are positioned above and below the head parts of the occupants P0 and P1.

By configuring the rear ends (30b and 32b) of the upper tether 30 and the lower tether 32 to be positioned above and below the head parts of the occupants P0 and P1, the head parts of occupants will be positioned between the two rear end parts 30b and 32b of the tethers 30 and 32 when viewed from the side of the vehicle. Therefore, the probability of the head part of an occupant of coming into contact with tether connection parts (30b and 32b), which are harder than the cushion portion, is low, enabling a soft support of the head part of the occupant.

The length of the upper tether 30 is formed to be shorter than the length of the lower tether 32. When viewed from the side of the vehicle, the upper tether 30 is provided to slope upward from front to rear, and the lower tether 32 is provided to slope downward from front to rear.

With the upper tether 30 provided so as to slope upward from front to rear, and the lower tether 32 provided so as to slope downward from the front to rear, a wider region can be formed on the surface of the expanded main chamber 17 on the side that restrains the occupant as depicted in FIG. 2, and in the wider region the head part of the occupant can be softly received without contacting the tether connection parts (30b and 32b). Although the head positions differ between occupant P0, equivalent to an adult male dummy, and occupant P1, equivalent to an adult female dummy, the head parts of either occupant can be reliably restrained in the region between a rear end part 30b of the upper tether 30 and a rear end part 32b of the lower tether 32.

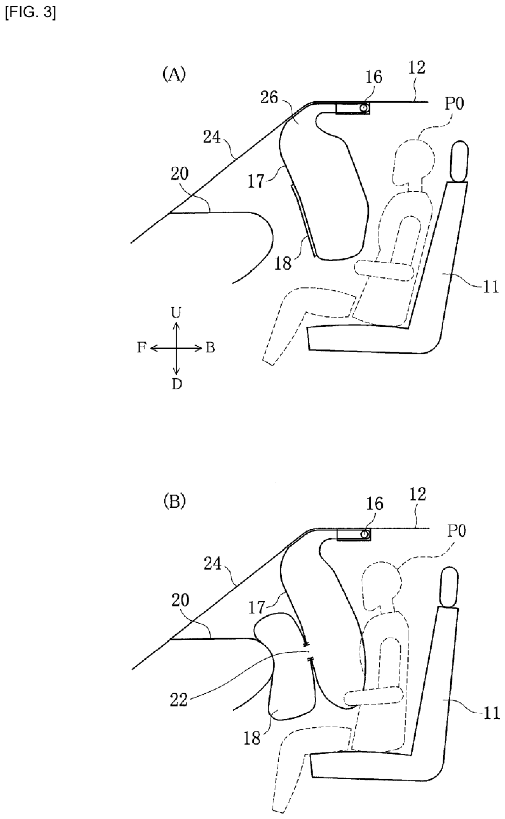

FIG. 3(A) and (B) are cross sectional views depicting the initial deployment state (A) and the fully deployed state (B) of an airbag according to Embodiment 1. Note that in FIG. 3, the tethers and the like are omitted from the depiction in order to clearly indicate the deployment behavior of the airbags 17 and 18. The airbags 17 and 18 are stowed in the housing 15 in a folded state, and when a collision is detected and the airbag device 14 is activated, a part of the roof lining ruptures and the airbags deploy into the vehicle cabin.

As depicted in FIG. 3(A), in the initial stage, the main chamber 17 first deploys diagonally downward from the roof portion inside the vehicle cabin. At this time, the bent part 26 comes into contact with the inner surface of the windshield 24 and can receive a reaction force from the windshield. In addition, the main chamber 17 deploys quickly in a position close to the occupant, so the main chamber 17 reliably restricts forward movement of the occupant.

Next, as depicted in FIG. 3(B), the expansion gas filling the main chamber 17 flows into the sub-chamber 18 through the vent hole 22. This causes the sub-chamber 18 to deploy forward. The sub-chamber 18 quickly makes contact with the instrument panel 20 and receives a reaction force from the instrument panel 20, thus stabilizing the deployment behavior of both the sub-chamber 18 and the main chamber 17.

### Embodiment 2

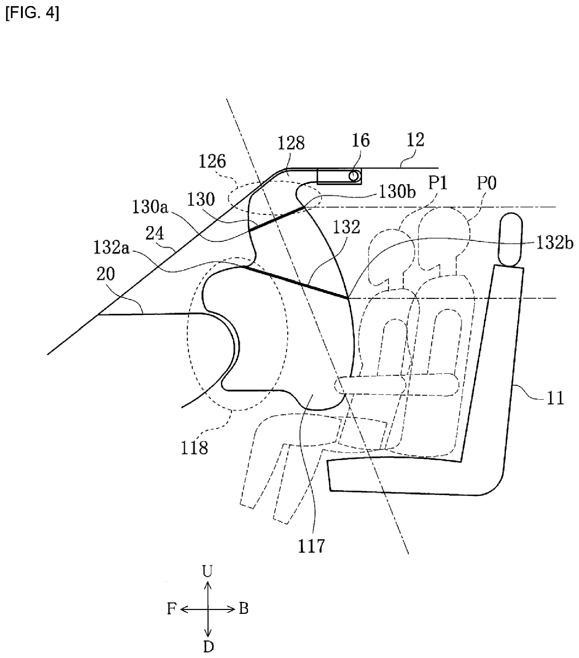

FIG. 4 is a side view depicting a deployed state of the airbag according to Embodiment 2 of the present invention. Note that the same or corresponding structural elements as those in Embodiment 1 described above are given the same reference numerals, and duplicated explanations will be omitted. In the present embodiment, a protruding part 118, which expands at a lower part of a main chamber 117 so as to protrude toward the front of the vehicle, is formed integrally with the main chamber 117. In other words, the main chamber 117 and the protruding part 118 are formed as the same chamber, and not as a structure that connects two different chambers.

Similar to Embodiment 1, the main chamber 117 is configured to deploy with a lower portion tilted toward the occupant relative to the vertical direction (U-D direction). At an upper end part of the main chamber 117, a horizontal chamber 128 is provided that is continuous with the main chamber 117 and expands and deploys along the roof portion 12, and an inflator 16 is stowed inside the horizontal chamber 128. The main chamber 117 is designed to expand and deploy due to the gas flowing in from the horizontal chamber 128.

A bent part 126 is formed at a boundary portion between the main chamber 117 and the horizontal chamber 128. The basic structure and function of the bent part 126 are the same as those of the bent part 26 in Embodiment 1.

Two tethers (upper tether 130 and lower tether 132) are connected to the inner surface of the main chamber 117 to restrict deployment of the main chamber 117 in the front-back direction. The front ends (130a and 132a) of the tethers 130 and 132 are sewn to the inside front surface of the main chamber 117, and the rear ends (130b and 132b) are sewn to the inside back surface of the main chamber 117. Note that the basic structure and function of the upper tether 130 and the lower tether 132 are the same as those of the tethers 30 and 32 in Embodiment 1.

In the present embodiment, the airbags 117 and 118 are stowed in the housing 15 in a folded state, and when a collision is detected and the airbag device is activated, a part of the roof lining ruptures and the airbags deploy into the vehicle cabin.

In the initial stages of airbag deployment, the main chamber 117 first deploys diagonally downward from the roof portion inside the vehicle cabin. The protruding part 118 will deploy forward at the same time as, or slightly after, deployment of the main chamber 117.

### Embodiment 3

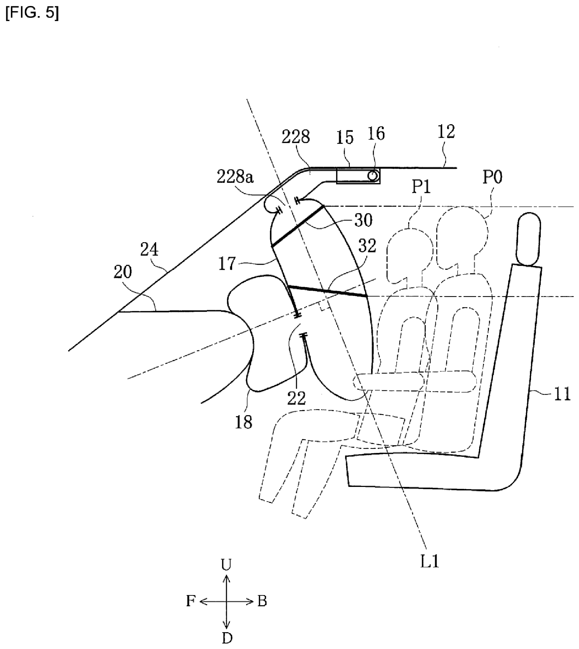

FIG. 5 is a side view depicting a deployed state of the airbag according to Embodiment 3 of the present invention. Note that the same or corresponding structural elements as those in Embodiment 1 and Embodiment 2 described above are given the same reference numerals, and duplicated descriptions will be omitted.

The present embodiment is an adaptation of Embodiment 1 described above, and includes a horizontal chamber 228 that is connected to an upper end part of the main chamber 17 and expands and deploys along the roof portion, provided separately from the main chamber 17. Furthermore, the main chamber 17 expands and deploys due to the gas flowing in from the horizontal chamber 228 through a vent hole 228a. The vent hole 228a corresponds to the second vent.

By providing the horizontal chamber 228 as a chamber different from the main chamber 17, and by refining the shape and length of the horizontal chamber 228, the position of the vent hole 228a, and the like, the flow direction and flow rate of the expansion gas flowing into the main chamber 17, and further the deployment position and deployment direction (L1) of the main chamber 17, can be adjusted.

### Interpretation of the Technical Scope of the Present Invention

Examples of the present invention have been described above; however, the present invention is not limited in any way to the examples described above and can be changed as appropriate within the scope of the technical idea as that defined in the patent claims.

### DESCRIPTION OF CODES

10. Vehicle cabin
14. Airbag device
17. Main chamber
18. Sub-chamber
22. Vent hole
24. Windshield
26. Bent part
28. Horizontal Chamber
30. Upper tether
30a. Front-end part
30b. Rear-end part
32. Lower tether
32a Front-end part
32b. Rear-end part
118. Protruding part
228a. Vent Hole

## Claims

1. An airbag device comprising:
an airbag that protects an occupant by deploying in front of the occupant in a vehicle cabin, wherein
the airbag includes a main chamber that deploys downward from a roof portion of the vehicle, and a protruding part that deploys at a lower part of the main chamber so as to protrude toward the front of the vehicle.

2. The airbag device according to claim 1, wherein the protruding part is a sub-chamber provided enabling fluid communication with the main chamber, and is configured to expand and deploy by gas flowing in from the main chamber through a first vent.

3. The airbag device according to claim 2, wherein, when viewed from a side of the vehicle, the first vent is positioned below a center of the main chamber in a longitudinal direction thereof.

4. The airbag device according to claim 2, wherein, when viewed from a side of the vehicle, the sub-chamber is configured to deploy in a direction substantially perpendicular to a longitudinal direction of the main chamber in a deployed state.

5. The airbag device according to claim 1, wherein the protruding part is formed integrally with the main chamber.

6. The airbag device according to claim 1, wherein the main chamber is configured to deploy in an inclined manner with respect to a vertical direction such that a lower portion approaches the occupant.

7. The airbag device according to claim 1, wherein the main chamber has a bent part near an upper end part thereof.

8. The airbag device according to claim 1, further comprising:
a horizontal chamber connected to an upper end part of the main chamber and configured to expand and deploy along the roof portion, wherein
the main chamber is configured to expand and deploy by gas flowing in from the horizontal chamber.

9. The airbag device according to claim 8, wherein the horizontal chamber is formed as a chamber separate from the main chamber, and is configured such that expansion gas flows from the horizontal chamber into the main chamber through a second vent.

10. The airbag device according to any one of claims 1 to 8, further comprising at least two tethers connected to an inner surface of the main chamber and configured to regulate deployment of the main chamber in a front-back direction thereof.

11. The airbag device according to claim 10, wherein the at least two tethers include an upper tether and a lower tether, and when the airbag is deployed, rear ends of the upper tether and the lower tether are respectively positioned above and below a head part of an occupant (corresponding to a THOR AM50 dummy developed by NHTSA: National Highway Traffic Safety Administration).

12. The airbag device according to claim 10, wherein the at least two tethers include an upper tether and a lower tether, and when the airbag is deployed, rear ends of the upper tether and the lower tether are respectively positioned above and below a head part of an occupant (corresponding to a THOR AF05 dummy in a standard developed by NHTSA: National Highway Traffic Safety Administration).

13. The airbag device according to claim 11, wherein the length of the upper tether is set shorter than the length of the lower tether.

14. The airbag device according to claim 12, wherein the length of the upper tether is set shorter than the length of the lower tether.

15. The airbag device according to claim 13, wherein, when viewed from a side of the vehicle, the upper tether is provided so as to be inclined upward from front to rear, and the lower tether is provided so as to be inclined downward from front to rear.

16. The airbag device according to claim 14, wherein, when viewed from a side of the vehicle, the upper tether is provided so as to be inclined upward from front to rear, and the lower tether is provided so as to be inclined downward from front to rear.

17. The airbag device according to claim 7, wherein the main chamber expands and deploys in a direction intersecting the windshield of the vehicle due to an upper surface of the bent part receiving reaction force from the windshield of the vehicle during expansion and deployment.
